# NEUE EUROPÄISCHE PATENTSCHRIFT

(11) **EP 3 516 000 B2**
(45) Veröffentlichungstag und Bekanntmachung des Hinweises auf die Entscheidung über den Einspruch: **01.03.2023**
(45) Hinweis auf die Patenterteilung: 17.06.2020
(21) Anmeldenummer: 17771709.7
(22) Anmeldetag: 13.09.2017
(51) Int. Cl.: C09D 167/02

(54) **WÄSSRIGE BASISLACKE MIT VERBESSERTER RINGLEITUNGSSTABILITÄT**
AQUEOUS BASECOATS WITH IMPROVED LOOP STABILITY
VERNIS À BASE AQUEUSE AYANT UNE STABILITÉ DE CIRCUIT ANNULAIRE AMÉLIORÉE

(30) Priorität: 22.09.2016 EP 16190067
(43) Veröffentlichungstag der Anmeldung: 31.07.2019
(73) Patentinhaber: BASF Coatings GmbH, 48165 Münster (DE)
(72) Erfinder: STEINMETZ, Bernhard, 48165 Muenster (DE); LOEW, Norbert, 97080 Wuerzburg (DE)
(74) Vertreter: BASF IP Association
(86) Internationale Anmeldenummer: PCT/EP2017/072950
(87) Internationale Veröffentlichungsnummer: WO 2018/054726

(56) Entgegenhaltungen:
- US-A1- 2011 111 242
- US-A1- 2014 242 280

## Beschreibung

### Stand der Technik

Die vorliegende Erfindung betrifft eine neuartige Verwendung einer Kombination von Komponenten in wässrigen Basislacken zur Verbesserung der Ringleitungsstabilität dieser Basislacke. Die Basislacke lassen sich aufgrund ihrer hervorragenden Ringleitungsstabilität optimal im Bereich der industriellen Lackierung, insbesondere Automobillackierung, einsetzen.

Bekannt ist eine Vielzahl von wässrigen Basislacken sowie Verfahren zur Herstellung von farb- und/oder effektgebenden mehrschichtigen Lackierungen (auch genannt Mehrschichtbeschichtungen oder Mehrschichtlackierungen), bei denen entsprechende Basislacke eingesetzt werden. Aus dem Stand der Technik (vergleiche beispielsweise die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist beispielsweise das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt.

Die heutigen Anforderungen an die anwendungstechnologischen und ästhetischen Eigenschaften solcher Lackierungen (Beschichtungen) sind enorm. Von entscheidender Bedeutung ist dabei, dass die eingesetzten Beschichtungsmittel nicht nur grundsätzlich entsprechend gute Eigenschaften aufweisen, sondern diese Eigenschaften auch nach im Bereich der industriellen Verarbeitung zwangsläufig auftretenden Beanspruchungen des Lacks erhalten bleiben. So müssen die Lacke beispielsweise lagerstabil sein. Genauso müssen sie allerdings den mechanischen Beanspruchungen, die sie durch die in industriellen Lackieranlagen unvermeidbaren Ringleitungssysteme erfahren, standhalten. In entsprechenden Ringleitungssystemen werden die Lacke wiederholt und alternierend durch Einsatz von Farbumlaufpumpen auf Drücke von über 10 bar gebracht, durch bis zu mehrere 100 Meter lange Rohrleitungen geführt und dann wieder in Vorratsgefäße zurückgeführt. Das rheologische Anforderungsprofil ist also außerordentlich hoch.

Gerade im Bereich der wässrigen Basislacke, die durch die in ihnen enthaltenen Farbpigmente und das Hauptlösemittel Wasser hinsichtlich der rheologischen Stabilität sehr herausfordernd sind, besteht häufig das Problem der nicht ausreichenden Ringleitungsstabilität. Dies bedeutet, dass durch wiederholtes Umpumpen des Lacks durch ein Ringleitungssystem die rheologischen Eigenschaften des Lacks negativ beeinflusst werden und somit die daraus hergestellten Lackierungen ebenfalls schlechtere anwendungstechnische, insbesondere schlechtere ästhetische Eigenschaften, aufweisen.

Die US 2011/0111242 A1 beschreibt eine Methode zur Herstellung einer Mehrschichtbeschichtung mit exzellenter Glätte, DOI, Wasserbeständigkeit und Steinschlagbeständigkeit. Die Methode umfasst das nacheinander erfolgende Aufbringen auf ein Substrat eines wasserbasierten ersten farbgebenden Lacks und eines wasserbasierten zweiten farbgebenden Lacks, das gemeinsame Erhitzen und Härten der daraus resultierenden ersten und zweiten farbgebenden Beschichtungsfilme, wobei der wasserbasierte erste farbgebende Lack ein OHfunktionelles Polyesterharz, einen Vernetzer und ein wasserdispergierbares Acrylharz enthält, wobei das Acrylharz über die Polymerisation einer MonomerKomponente erhalten wird, welche spezielle polymerisierbare ungesättigte Monomere enthält.

Die vorliegende Erfindung betrifft eine Verwendung einer Kombination von
(A) mindestens einem hydroxylfunktionellen Polymer als eine Bindemittelkomponente
(B) mindestens einer von der Komponente (A) verschiedenen Bindemittelkomponente enthaltend
   (B1) mindestens ein Carbonylgruppen-haltiges Polyurethan-Poly(meth)acrylat sowie
   (B2) mindestens eine organische Verbindung mit mindestens zwei Hydrazin-, Hydrazid- und/oder Hydrazongruppen,
   sowie
(C) mindestens einem verzweigten und/oder sekundären aliphatischen Monoalkohol mit mindestens vier Kohlenstoffatomen in wässrigen Basislacken zur Verbesserung der Ringleitungsstabilität dieser Basislacke.

Der wässrige Basislack besitzt eine hervorragende Ringleitungsstabilität und ist dadurch zur Verarbeitung über industrielle Anlagen, die von entsprechenden Ringleitungssystemen Gebrauch machen, hervorragend geeignet. Es resultieren also trotz wiederholten Umpumpens des Lacks durch ein Ringleitungssystem Lackierungen mit hervorragendem Eigenschaftsprofil, insbesondere hervorragenden ästhetischen Eigenschaften.

Der erfindungsgemäß zu verwendende wässrige Basislack enthält (A) mindestens ein hydroxylfunktionelles Polymer als Bindemittelkomponente.

### Beschreibung

Als Bindemittel oder Bindemittelkomponente wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, oder weiter unten beschriebene typische Vernetzungsmittel, auch wenn der Ausdruck im Folgenden hauptsächlich in Bezug auf bestimmte physikalisch und/oder thermisch härtbare Polymere, beispielsweise die Polymere der Komponente (A) oder die Bestandteile der Komponente (B) verwendet wird.

Grundsätzlich kommen als Polymere für die Bindemittelkomponente (A) alle dem Fachmann in diesem Zusammenhang bekannten Polymere in Frage. Bevorzugt eingesetzt wird mindestens ein Polymer ausgewählt aus der Gruppe bestehend aus Polyurethanen, Polyestern, Poly(meth)acrylaten und/oder Mischpolymerisaten der genannten Polymere wie Polyurethan-Poly(meth)acrylate (auch genannt Polyurethan-Poly(meth)acrylat-Mischpolymerisate). Der Begriff (Meth)acrylat stellt klar, dass in einem entsprechenden Polymer sowohl acrylische als auch methacrylische Monomere vorhanden sein können. Davon unabhängig weiß der Fachmann, dass entsprechende Polymere auch weitere olefinisch ungesättigte Monomere wie beispielsweise typische vinylische Monomere wie Vinylchlorid und Styrol enthalten können. Entsprechende Polymere und deren Herstellung sowie entsprechende Ausgangsstoffe sind dem Fachmann jedenfalls bekannt und bedürfen keiner weiteren grundsätzlichen Erläuterung. Bevorzugte Polyurethane sind beispielsweise in der deutschen Patentanmeldung DE 199 48 004 A1, Seite 4, Zeile 19 bis Seite 11 Zeile 29 (dort genannt Polyurethanpräpolymer B1) oder auch der internationalen Anmeldung WO 92/15405, Seite 2, Zeile 35 bis Seite 10, Zeile 32 beschrieben. Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 oder auch in WO 2014/033135 A2, Seite 2, Zeile 24 bis Seite 7, Zeile 10 beschrieben. Bevorzugte Polyurethan-Poly(meth)acrylat-Mischpolymerisate und deren Herstellung werden beispielsweise in WO 91/15528 A1, Seite 3, Zeile 21 bis Seite 20, Zeile 33, in DE 4437535 A1, Seite 2, Zeile 27 bis Seite 6, Zeile 22 oder auch in WO 2015/007427 A1, Seite 3, Zeile 29 bis Seite 16, Zeilel 17 beschrieben.

Die genannten Polymere als Bindemittel sind hydroxylfunktionell. Bevorzugt weisen sie eine Hydroxylzahl von 5 bis 200 mg KOH/g, nochmals bevorzugt 15 bis 150 mg KOH/g auf.

Die Hydroxylzahl wird im Rahmen der vorliegenden Erfindung nach DIN 53240 bestimmt und ist jeweils auf das Polymer selbst, das heißt den Festkörper, bezogen (Messmethode Festkörper siehe weiter unten).

Bevorzugt werden die genannten Polymere (A) als Bindemittel in Form von wässrigen Dispersionen, insbesondere Sekundärdispersionen, im Basislack eingesetzt. Um in wässriger Dispersion effektiv dispergiert werden zu können, sind die Polymere bevorzugt auf bekannte Weise ionisch und/oder nicht ionisch hydrophil modifiziert. Insbesondere bevorzugt sind sie anionisch modifiziert, bevorzugt also carboxyfunktionell.

Bevorzugt besitzen die Polymere, bezogen auf den Festkörper, eine Säurezahl von 0 bis 50 mg KOH/g, insbesondere 2 bis 45 mg KOH/g (gemessen nach DIN 53402).

Besonders bevorzugt gilt im Rahmen der vorliegenden Erfindung, dass die Bindemittelkomponente (A) eine Kombination mindestens eines hydroxylfunktionellen Polyurethan-Poly(meth)acrylat-Mischpolymerisats und mindestens eines hydroxylfunktionellen Polyesters enthält. Nochmals bevorzugt enthält sie zudem mindestens ein hydroxylfunktionelles Polyurethan.

Die Summe über die gewichtsprozentualen Anteile, bezogen auf den filmbildenden Festkörpers des pigmentierten wässrigen Basislacks, aller hydroxylfunktionellen Polymere (A) als Bindemittelkomponente beträgt bevorzugt 2 bis 95 Gew.-%, besonders bevorzugt 5 bis 95 Gew.-% und ganz besonders bevorzugt 10 bis 90 Gew.-%.

Unter filmbildendem Festkörper, welcher letztlich dem Bindemittelanteil entspricht, ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Im Falle einer möglichen Spezifizierung auf Basislacke enthaltend bevorzugte Polymere (A) in einem speziellen Anteilsbereich gilt folgendes. Die Polymere (A), die nicht in die bevorzugte Gruppe fallen, können selbstverständlich weiterhin im Basislack enthalten sein. Der spezielle Anteilsbereich gilt dann nur für die bevorzugte Gruppe von Polymeren (A). Bevorzugt ist allerdings, dass für den Gesamtanteil von Polymeren bestehend aus Polymeren (A) aus der bevorzugten Gruppe und Polymeren (A), die nicht in die bevorzugte Gruppe fallen, ebenfalls der spezielle Anteilsbereich gilt.

Würde also eine Beschränkung auf einen Anteilsbereich von 2 bis 95 Gew.-% und eine bevorzugte Gruppe von Polymeren (A) durchgeführt werden, so gilt dieser Anteilsbereich augenscheinlich zunächst nur für die bevorzugte Gruppe an Polymeren (A). Bevorzugt ist dann aber, dass insgesamt von allen ursprünglich umfassten Polymeren (A) bestehend aus Polymeren (A) aus der bevorzugten Gruppe und Polymeren (A), die nicht in die bevorzugte Gruppe fallen, ebenfalls von 2 bis 95 Gew.-% enthalten sind. Werden also 80 Gew.-% von Polymeren (A) der bevorzugten Gruppe eingesetzt, so können höchstens 15 Gew.-% der Polymere (A) der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die weiter unten beschriebenen Komponenten (B) und (C).

Der wässrige Basislack enthält zudem eine spezielle, von der Komponente (A) verschiedene Bindemittelkomponente (B).

Die Bindemittelkomponente (B) enthält zunächst (B1) mindestens ein Carbonylgruppen-haltiges Polyurethan-Poly(meth)acrylat.

Entsprechende Polymere und deren Herstellung sind dem Fachmann wiederum bekannt. Wichtig ist in diesem Zusammenhang, dass das Polyurethan-Poly(meth)acrylat Carbonylgruppen enthält. Unter Carbonylgruppen werden im Rahmen der vorliegenden Erfindung Keto- und Aldehydgruppen, bevorzugt Ketogruppen, verstanden. Durch diese Carbonylgruppen und das Vorhandensein von wie weiter unten beschriebenen Komponenten (B2) ist die vernetzende Reaktion unter Ausbildung von Iminen möglich. Die Bindemittelkomponente (B) ist also selbstvernetzend.

Wie angemerkt, sind entsprechende Reaktionsführungen zur Herstellung von Polyurethan-Poly(meth)acrylaten bekannt. Um Carbonylgruppen in solche Polymere einzuführen, werden entsprechend funktionalisierte Monomere in das Polymergerüst einpolymerisiert. Bevorzugt erfolgt dies über den Einsatz von Vinylgruppen-haltigen Monomeren, die zudem Carbonylgruppen enthalten. Beispielweise eingesetzt werden können Monomere wie Methylvinylketon, (Meth)Acrolein, Crotonaldehyd oder Diaceton(meth)acrylamid. Bevorzugt ist Diacetonacrylamid. Der Anteil an bei der Herstellung einzusetzenden Carbonylgruppen-haltigen Monomeren beträgt beispielsweise 5 bis 70 Gew.-%, bezogen auf das Gesamtgewicht der zur Herstellung des jeweiligen Polymers eingesetzten Ausgangsstoffe.

Bevorzugt werden die genannten Polymere (B1) als wässrige Dispersionen hergestellt und dann mit der Komponente (B2) versetzt. Um in wässriger Dispersion effektiv dispergiert werden zu können, sind die Polymere (B1) bevorzugt auf bekannte Weise ionisch und/oder nicht ionisch hydrophil modifiziert. Insbesondere bevorzugt sind sie anionisch modifiziert, bevorzugt also carboxyfunktionell.

Bei der Komponente (B2) handelt es sich um eine organische Verbindung enthaltend mindestens zwei Hydrazin-, Hydrazid- und/oder Hydrazongruppen. Bevorzugt handelt es sich um niedermolekulare Verbindungen mit einem Molekulargewicht von kleiner 1000 g/mol. Entsprechende Verbindungen sind ebenfalls bekannt. Beispielsweise zu nennen sind Bishydrazide von Dicarbonsäuren mit 2 bis 12 C-Atomen wie die Bishydrazide der Oxalsäure, Malonsäure, Bernsteinsäure, Glutarsäure, Adipinsäure, Pimelinsäure, Korksäure, Azelainsäure, Sebacinsäure oder der isomeren Phthalsäuren; Kohlensäurebishydrazid, Alkylen- oder Cycloalkylen-bis-semicarbazide, N,N'-Diaminoguanidin, Alkylenbishydrazine wie N,N'-Diaminopiperazin, Arylenbishydrazine wie Phenylen- oder Naphthylenbishydrazin, Alkylenbissemicarbazide, Bishydrazide von Dialdehyden und Diketonen. Komponenten (B2) mit höherer Funktionalitätsind beispielsweise die Hydrazide der Nitrilotriessigsäure oder der Äthylendiamintetraessigsäure.

Bevorzugt eingesetzt werden Bishydrazide von Dicarbonsäuren mit 2 bis 12 C-Atomen, insbesondere das Bishydrazid der Adipinsäure.

Wie bereits oben beschrieben, wird die Komponente (B) bevorzugt in Form einer wässrigen Dispersion im Basislack eingesetzt. Dabei ist es bevorzugt, dass das stöchiometrische Verhältnis von Carbonylgruppen der Komponente (B1) und der Hydrazin-, Hydrazid- und/oder Hydrazongruppen der Komponente (B2) von 40:1 bis 1:2, nochmals bevorzugt von 20:1 bis 1:2 beträgt.

Entsprechende Bindemittelkomponenten (B) werden beispielsweise in EP 0649 865 A1, Seite 3, Zeile 1 bis Seite 9, Zeile 46 sowie den dazugehörigen Beispielen 2, 4, 6 und 7 bis 9 beschrieben. Kommerziell erhältlich sind entsprechende Komponenten in Form von wässrigen Dispersionen unter dem Handelsnamen Daotan (Fa. Allnex).

Die Summe über die gewichtsprozentualen Anteile, bezogen auf den filmbildenden Festkörpers des pigmentierten wässrigen Basislacks, aller Bindemittelkomponenten (B) beträgt bevorzugt 2 bis 95 Gew.-%, besonders bevorzugt 5 bis 95 Gew.-% und ganz besonders bevorzugt 10 bis 90 Gew.-%.

Der wässrige Basislack enthält zudem mindestens einen speziellen Alkohol (C) als Lösemittel. Dabei handelt es sich um einen verzweigten und/oder sekundären aliphatischen Monoalkohol mit mindestens vier Kohlenstoffatomen.

Aliphatische Verbindungen sind im Einklang mit der gebräuchlichen Definition alle organischen Verbindungen, die nicht aromatisch sind oder aromatische Gruppen enthalten. Demzufolge kann es sich bei einem aliphatischen Monoalkohol um ein Molekül handeln, dass, abgesehen von der Hydroxylgruppe, ausschließlich aus Kohlenstoff und Wasserstoff besteht. Möglich ist aber genauso, dass neben dem Sauerstoffatom der Hydroxylgruppe noch weitere Heteroatome enthalten sind, insbesondere in Form von verbrückenden Gruppen wie Ether-, Ester-, Amid- und/oder Urethangruppen, insbesondere Ethergruppen.

Bevorzugt ist, dass der Alkohol (C) neben der einen Hydroxylgruppe keine weiteren endständigen funktionellen Gruppen, welche Heteroatome enthalten, aufweist.

Die Alkohole (C) sind sekundär, verzweigt oder sowohl sekundär, als auch verzweigt.

Ein aliphatischer sekundärer Alkohol ist ein solcher, in dem die Hydroxylgruppe an ein Kohlenstoffatom geknüpft ist, an welches nur ein Wasserstoffatom geknüpft ist. Zwei der Reste an diesem ersten Kohlenstoffatom sind also aliphatische Reste, die jeweils über ein Kohlenstoffatom an das erste Kohlenstoffatom geknüpft sind.

Ist der Alkohol sekundär, kann der aliphatische Rest des Monoalkohols linear, verzweigt oder cyclisch sein.

Linear bedeutet in diesem Zusammenhang bekanntermaßen, dass der jeweilige Rest keine Verzweigungen hinsichtlich der Kohlenstoffhauptkette aufweist, sondern die Kohlenstoffatome ausschließlich in linearer Abfolge in einer Kette angeordnet sind. Möglich ist allerdings, dass die Kohlenstoffhauptkette verbrückende Gruppen wie Ethergruppen enthält, das heißt also die direkte Abfolge von Kohlenstoffatomen unterbrochen ist.

Verzweigt beziehungsweise nicht-linear bedeutet damit im Rahmen der vorliegenden Erfindung, dass derjeweils betrachtete Rest im Unterschied zu linearen Resten eine Verzweigung in der Kohlenstoffhauptkette aufweist, das heißt also anders als bei den linearen Resten mindestens ein Kohlenstoffatom des jeweiligen Restes ein tertiäres oder quartäres Kohlenstoffatom ist. Eine wie oben genannte Unterbrechung der direkten Abfolge von Kohlenstoffatomen in der Hauptkette ist natürlich weiterhin möglich.

Als cyclisch beziehungsweise cycloaliphatisch werden solche Reste bezeichnet, in denen zumindest ein Teil der vorhandenen Kohlenstoffatome so verknüpft sind, dass einer oder mehrere Ringe ausgebildet werden. Natürlich können neben dem einen oder den mehreren Ringen weitere acyclische lineare oder verzweigte aliphatische Gruppen in einem cycloaliphatischen Rest vorhanden sein.

Ist der Alkohol verzweigt, kann er eine primäre, sekundäre oder tertiäre Hydroxylgruppe enthalten, bevorzugt eine primäre oder sekundäre Hydroxylgruppe.

Der Alkohol (C) weist bevorzugt mindestens 6, nochmals bevorzugt mindestens 7 Kohlenstoffatome auf. Bevorzugte Bereiche sind 6 bis 12, nochmals bevorzugt 7 oder 8 Kohlenstoffatome.

Beispielhaft genannt seien 3-Butoxy-2-propanol, 1-Propoxy-2-propanol, Dipropylenglykolmonomethylether, 2-Ethylhexanol und 2-Ethylhexylglykol. Bevorzugt sind 3-Butoxy-2-propanol, Dipropylenglykolmonomethylether und 2-Ethylhexanol, nochmals bevorzugt 3-Butoxy-2-propanol, und 2-Ethylhexanol, insbesondere 3-Butoxy-2-propanol.

Die Summe über die gewichtsprozentualen Anteile, bezogen auf das Gesamtgewicht des pigmentierten wässrigen Basislacks, aller Monoalkohole (C) beträgt bevorzugt 1 bis 10 Gew.-%, besonders bevorzugt 2 bis 10 Gew.-% und ganz besonders bevorzugt 3 bis 10 Gew.-%.

Der Basislack enthält farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 30 Gew.-%, besonders bevorzugt 3 bis 25 Gew.-%, bezogen auf das Gesamtgewicht des pigmentierten wässrigen Basislacks, liegen.

Der Basislack kann auch an sich bekannte und typische Vernetzungsmittel enthalten, insbesondere Aminoplastharze und/oder blockierte und/oder unblockierte Polyisocyanate, insbesondere bevorzugt Melaminharze. Bevorzugt enthält er ein solches Vernetzungsmittel. Die Summe über die gewichtsprozentualen Anteile, bezogen auf den filmbildenden Festkörpers des pigmentierten wässrigen Basislacks, aller Vernetzungsmittel, beträgt bevorzugt 1 bis 40 Gew.-%, besonders bevorzugt 5 bis 35 Gew.-% und ganz besonders bevorzugt 7,5 bis 30 Gew.-% oder sogar 10 bis 30 Gew.-%.

Aus Obigem folgt, dass der Basislack jedenfalls thermisch härtbar ist, das heißt thermisch härtbare Komponenten enthält. Dies gilt jedenfalls für die selbstvernetzende Komponente (B). Genauso gilt dies für die hydroxylfunktionelle Komponente (A) in Anwesenheit möglicher Vernetzungsmittel wie Melaminharzen.

Denn im Einklang mit der gebräuchlichen Definition bedeutet der Begriff "thermische Härtung" die durch Wärme initiierte, chemische Vernetzung einer Lackschicht, bei der in dem zugrunde liegenden Lack ein Bindemittel und ein separat vorliegendes Vernetzungsmittel und/oder selbstvernetzende Bindemittel angewandt werden. Bestimmte reaktive funktionelle Gruppen, beispielsweise Hydroxylgruppen oder Carbonylgruppen sowie dazu komplementäre reaktive funktionelle Gruppen, beispielsweise Methylolgruppen oder Hydrazidgruppen sind vorhanden und können miteinander vernetzen. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Natürlich wird bei der Härtung solcher Lacke auch immer eine anteilige physikalische Härtung eintreten, das heißt die Bildung eines Films durch Abgabe von Lösemittel aus Polymerlösungen oder Polymerdispersionen und Verschlaufung der Polymere. Trotzdem wird dann der Lack als thermisch härtend bezeichnet.

Bevorzugt ist zudem ein Verdicker im Basislack enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylatCopolymerisat-Verdickern, wie beispielsweise dem Handelsprodukt Rheovis AS 1130 (BASF) und Polyurethanverdickern, wie beispielsweise dem Handelsprodukt Rheovis PU 1250 (BASF). Die eingesetzten Verdicker sind von den eingesetzten Bindemitteln verschieden.

Die Summe über die gewichtsprozentualen Anteile, bezogen auf das Gesamtgewicht des pigmentierten wässrigen Basislacks, aller Verdicker, beträgt bevorzugt von 0,1 bis 2,5 Gew.-%, besonders bevorzugt 0,15 bis 2,0 Gew.-% und ganz besonders bevorzugt 0,2 bis 2,0 Gew.-%.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von den oben beschriebenen Polymeren verschiedene physikalisch, thermisch und/oder mit aktinischer Strahlung härtbare Harze als Bindemittel, beispielsweise die in der WO 2016/091539 A1, Seite 9, Zeile 30 bis Seite 33, Zeile 2 beschriebenen Polymere, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper, sofern nicht explizit anders angegeben, nach DIN EN ISO 3251 bestimmt. Dazu wird der Basislack für 60 Minuten bei 130°C eingedampft.

Diese Prüfmethode wird, sofern nicht anders angegeben, ebenfalls angewandt, um beispielsweise den Anteil verschiedener Komponenten des Basislacks am Gesamtgewicht des Basislacks zu bestimmen. So kann beispielsweise der Festkörper einer Dispersion eines Polyurethanharzes, welches dem Basislack zugegeben werden soll, entsprechend bestimmt werden, um den Anteil dieses Polyurethanharzes an der Gesamtkomposition zu ermitteln.

Der Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Die Herstellung der Basislacke kann unter Einsatz der für die Herstellung von Basislacken üblichen und bekannten Mischverfahren und Mischaggregaten erfolgen.

In einer bevorzugten Ausführungsform beträgt
die Summe über die gewichtsprozentualen Anteile, bezogen auf den filmbildenden Festkörpers des pigmentierten wässrigen Basislacks, aller hydroxylfunktionellen Polymere (A) als Bindemittelkomponente 2 bis 95 Gew.-%,
die Summe über die gewichtsprozentualen Anteile, bezogen auf den filmbildenden Festkörpers des pigmentierten wässrigen Basislacks, aller Bindemittelkomponenten (B) 2 bis 95 Gew.-%, und
die Summe über die gewichtsprozentualen Anteile, bezogen auf das Gesamtgewicht des pigmentierten wässrigen Basislacks, aller Monoalkohole (C) 1 bis 10 Gew.-%.

Ein weiterer Aspekt ist ein Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass in Stufe (1) ein wie oben beschriebener wässriger Basislack eingesetzt wird und der Basislack während des Verfahrens über ein Ringleitungssystem geführt wird.

Alle vorstehend genannten Ausführungen hinsichtlich des wässrigen Basislacks gelten auch für das Verfahren. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wir dieses vor der Applikation des Füllers oder Grundierfüllers bevorzugt noch mit einer Elektrotauchlackierung beschichtet.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des pigmentierten wässrigen Basislacks auf wie oben beschriebene mit gehärteten Elektrotauchlackierungen und/oder Füllern vorbeschichtete Metallsubstrate kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine farb- und/oder effektgebende mehrschichtige Lackierung auf einem Substrat hergestellt wird. Die Härtung erfolgt bevorzugt thermisch bei Temperaturen von 60 bis 200°C.

Das Verfahren zur Herstellung einer mehrschichtigen Lackierung kann insbesondere die folgenden Schritte umfassen:
Herstellung einer gehärteten Elektrotauchlackschicht auf dem metallischen Substrat durch elektrophoretisches Aufbringen eines Elektrotauchlacks auf das Substrat und anschließende Härtung des Elektrotauchlacks,

Herstellung (i) einer Basislackschicht oder (ii) mehrerer direkt aufeinander folgender Basislackschichten direkt auf der gehärteten Elektrotauchlackschicht durch (i) Aufbringen eines wässrigen Basislacks direkt auf die Elektrotauchlackschicht oder (ii) direkt aufeinanderfolgendes Aufbringen von mehreren Basislacken auf die Elektrotauchlackschicht,

Herstellung einer Klarlackschicht direkt auf (i) der Basislackschicht oder (ii) der obersten Basislackschicht durch Aufbringen eines Klarlacks direkt auf (i) die eine Basislackschicht oder (ii) die oberste Basislackschicht, wobei (i) der eine Basislack oder (ii) mindestens einer der Basislacke ein wie oben beschriebener Basislack ist, gemeinsame Härtung der Basislackschicht (i) oder der Basislackschichten (ii) sowie der Klarlackschicht.

In der letztgenannten Variante wird also im Vergleich zu den oben beschriebenen Standardverfahren auf die Applikation und separate Härtung eines gängigen Füllers verzichtet. Stattdessen werden alle auf die Elektrotauchlackschicht applizierten Schichten gemeinsam gehärtet, wodurch der Gesamtprozess deutlich ökonomischer gestaltet wird.

Das Aufbringen eines Beschichtungsmittels direkt auf ein Substrat beziehungsweise direkt auf eine zuvor hergestellte Beschichtungsschicht versteht sich wie folgt. Das jeweilige Beschichtungsmittel wird so aufgebracht, dass die daraus hergestellte Beschichtungsschicht auf dem Substrat (der anderen Beschichtungsschicht) angeordnet ist und in direktem Kontakt mit dem Substrat (der anderen Beschichtungsschicht) steht. Zwischen Beschichtungsschicht und Substrat (anderer Beschichtungsschicht) ist also insbesondere keine andere Schicht angeordnet. Ohne die Angabe direkt ist die aufgebrachte Beschichtungsschicht zwar auf dem Substrat (der anderen Schicht) angeordnet, es muss aber nicht zwingend ein direkter Kontakt vorhanden sein. Insbesondere können weitere Schichten dazwischen angeordnet sein. Im Rahmen der vorliegenden Erfindung gilt also folgendes. Ist keine Spezifizierung von direkt angegeben, so ist augenscheinlich keine Beschränkung auf direkt gegeben.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90°C gehärtet. Bevorzugt ist daher der Einsatz von Zweikomponentenklarlacken.

Mit Hilfe des Verfahrens können metallische und nichtmetallische Substrate, insbesondere Kunststoffsubstrate, vorzugsweise Automobilkarosserien oder Teile davon lackiert werden.

Das Verfahren kann ferner zur Doppellackierung in der OEM-Lackierung eingesetzt werden. Darunter ist zu verstehen, dass ein Substrat, welches mit Hilfe des Verfahrens beschichtet wurde, ein zweites Mal, ebenfalls mit Hilfe des Verfahrens, lackiert wird.

Beschrieben werden ferner Mehrschichtlackierungen, welche nach dem oben beschriebenen Verfahren herstellbar sind.

Alle vorstehend genannten Ausführungen hinsichtlich des wässrigen Basislacks gelten entsprechend auch für die besagte Mehrschichtlackierung sowie für das Verfahren. Dies gilt insbesondere auch für alle bevorzugten, besonders bevorzugten und ganz besonders bevorzugten Merkmale.

Diese Mehrschichtlackierungen werden bevorzugt auf Automobilkarossen oder Teilen davon mit Hilfe des oben beschriebenen Verfahrens im Rahmen der Automobilserienlackierung hergestellt.

Die vorliegende Erfindung betrifft die Verwendung einer Kombination der oben benannten Komponenten (A), (B) und (C) in wässrigen Basislacken zur Verbesserung der Ringleitungsstabilität dieser Basislacke.

Im Folgenden wird die Erfindung anhand von Beispielen erläutert.

### Beispiele

### Herstellung von wässrigen Basislacken

### Herstellung von wässrigen Basislacken

Hinsichtlich der in den nachstehenden Tabellen angegebenen Formulierungsbestandteile und deren Mengen ist folgendes zu berücksichtigen. Wird auf ein Handelsprodukt oder eine anderswo beschriebene Herstellvorschrift verwiesen, ist unabhängig von der jeweils gewählten Hauptbenennung des Bestandteils genau dieses Handelsprodukt oder genau das bei der referenzierten Vorschrift hergestellte Produkt gemeint.

Besitzt also ein Formulierungsbestandteil die Hauptbenennung "Melaminformaldehydharz" und ist dazu ein Handelsprodukt angegeben, so wird das Melaminformaldehydharz als genau dieses Handelsprodukt eingesetzt. Gegebenenfalls im Handelsprodukt vorhandene weitere Bestandteile wie Lösemittel sind also zu berücksichtigen, wenn auf die Menge der Wirksubstanz (des Melaminformaldehydharzes) zurückgeschlossen werden soll. Wird für einen Formulierungsbestandteil auf eine Herstellvorschrift verwiesen und resultiert bei dieser Herstellung beispielsweise eine Polymer-Dispersion mit einem bestimmten Festkörper, so wird genau diese Dispersion eingesetzt. Es ist nicht maßgeblich, ob als Hauptbenennung der Begriff "Polymer-Dispersion" oder lediglich die Wirksubstanz, beispielsweise "Polymer", "Polyester" oder "polyurethanmodifiziertes Polyacrylat" gewählt wurde. Dies ist zu berücksichtigen, wenn auf die Menge der Wirksubstanz (des Polymers) zurückgeschlossen werden soll.

### Herstellung eines silbernen Vergleich-Wasserbasislacks 1 (V1)

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 80± 10 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A:**

| Komponente | Gewichtsteile |
|---|---|
| **Wässrige Phase** | |
| 3%ige Na-Mg-Schichtsilikatlösung | 12 |
| Deionisiertes Wasser | 32,4 |
| Butylglykol | 5,0 |
| Isopar L (Fa. ExxonMobile) | 0,9 |
| Polyurethanmodifiziertes Polyacrylat (A); hergestellt gemäß S. 7, Z. 55 bis S.8, Z. 23 der DE 4437535 A | 3,0 |
| 50 Gew.-%ige Lösung Rheovis PU 1250 (BASF), Rheologiemittel | 1,9 |
| 10 Gew.-%ige Lösung Rheovis AS 1130 (BASF), Rheologiemittel | 3,0 |
| Hydroxylfunktioneller Polyester (A), hergestellt gemäß Beispiel D, Spalte 16, Zeile 37-59 der DE 4009858 A1 | 2,0 |
| TMDD 50 % BG (BASF), 52 %-ige Lösung von 2,4,7,9-Tetramethyl5-decin-4,7-diol in Butylglykol | 1,0 |
| Melaminformaldehydharz (Luwipal 052, BASF) | 6,4 |
| 10%iges Dimethylethanolamin in Wasser | 0,5 |
| Bindemittelkomponente (B) (Daotan VTW 6462 (Fa. Allnex)) | 12,7 |
| Pluriol P 900 (BASF) | 2,4 |
| Rußpaste | 0,4 |
| Gelbpaste | 0,4 |
| Rotpaste | 3,5 |

| **Organische Phase** | |
|---|---|
| Mischung zweier handelsüblicher Aluminiumpigmente, erhältlich von Firma Altana-Eckart | 5,2 |
| Butylglykol | 5,2 |
| Hydroxylfunktioneller Polyester (A), hergestellt gemäß Beispiel D, Spalte 16, Zeile 37-59 der DE 4009858 A1 | 5 |

### Herstellung der Rußpaste:

Die Rußpaste wurde aus 58,9 Gewichtsteilen einer gemäß der internationalen Patentanmeldung WO 92/15405 hergestellten Polyurethandispersion (Polymer (A)), 10 Gewichtsteilen Ruß, 5 Gewichtsteilen eines gemäß Beispiel D, Spalte 16, Z. 37-59 der DE 4009858 A1 hergestellten hydroxylfunktionellen Polyesters (Polymer (A)), 7,6 Gewichtsteilen Butyldiglykol (BASF SE), 8,2 Gewichtsteilen Dimethylethanolamin (10%ig in VE-Wasser), 2,2 Gewichtsteilen eines handelsüblichen Polyethers (Pluriol^{®} P900 der Firma BASF SE) und 8,1 Gewichtsteilen deionisiertem Wasser hergestellt.

### Herstellung der Gelbpaste:

Die Gelbpaste wurde aus 43,6 Gewichtsteilen einer gemäß der internationalen Patentanmeldung WO 92/15405 hergestellten Polyurethandispersion (Polymer (A)), 17,3 Gewichtsteilen eines handelsüblichen Gelbpigments (Sicotrans^{®} Gelb; BASF SE), 18,3 Gewichtsteilen eines gemäß Beispiel D, Spalte 16, Z. 37-59 der DE 4009858 A1 hergestellten hydroxylfunktionellen Polyesters (Polymer (A)), 4,3 Gewichtsteilen Butyldiglykol (BASF SE) und 16,5 Gewichtsteilen deionisiertem Wasser hergestellt.

### Herstellung der Rotpaste:

Die Rotpaste wurde aus 49,7 Gewichtsteilen einer gemäß der internationalen Patentanmeldung WO 91/15528 Bindemitteldispersion A hergestellten acrylierten Polyurethandispersion (Polymer (A)), 12 Gewichtsteilen Sicotrans^{®} Rot (BASF SE), 3 Gewichtsteilen eines handelsüblichen Polyethers (Pluriol^{®} P900 der Firma BASF SE), 2 Gewichtsteilen Butylglykol (BASF SE), 1 Gewichtsteil Dimethylethanolamin (10%ig in VE-Wasser) und 32,3 Gewichtsteilen deionisiertem Wasser hergestellt.

### Herstellung eines erfindungsgemäß zu verwendenden en Wasserbasislacks E1

Der Wasserbasislack E1 wurde analog Tabelle A hergestellt, wobei allerdings statt den in der wässrigen Phase vorhandenen 5 Gewichtsteilen Butylglykol (BASF SE) 5 Gewichtsteile 3-Butoxy-2-propanol (BASF SE) (Monoalkohol (C)) eingesetzt wurden.

### Herstellung eines erfindungsgemäß zu verwendenden Wasserbasislacks E2

Der Wasserbasislack E2 wurde analog Tabelle A hergestellt, wobei allerdings statt den in der wässrigen Phase vorhandenen 5 Gewichtsteilen Butylglykol (BASF SE) 5 Gewichtsteile 2-Ethylhexanol (BASF SE) (Monoalkohol (C)) eingesetzt wurden.

### Herstellung eines erfindungsgemäßen zu verwendenden Wasserbasislacks E3

Der Wasserbasislack E3 wurde analog Tabelle A hergestellt, wobei allerdings statt den in der wässrigen Phase vorhandenen 5 Gewichtsteilen Butylglykol (BASF SE) 5 Gewichtsteile 1-Propoxy-2-propanol (BASF SE) (Monoalkohol (C)) eingesetzt wurden.

### Herstellung eines erfindungsgemäß zu verwendenden en Wasserbasislacks E4

Der Wasserbasislack E4 wurde analog Tabelle A hergestellt, wobei allerdings statt den in der wässrigen Phase vorhandenen 5 Gewichtsteilen Butylglykol (BASF SE) 5 Gewichtsteile Dipropylenglykolmonomethylether (BASF SE) (Monoalkohol (C)) eingesetzt wurden.

### Herstellung eines erfindungsgemäß zu verwendenden en Wasserbasislacks E5

Der Wasserbasislack E5 wurde analog Tabelle A hergestellt, wobei allerdings statt den in der wässrigen Phase vorhandenen 5 Gewichtsteilen Butylglykol (BASF SE) 5 Gewichtsteile 2-Ethylhexylglykol (Eastman Chemical) (Monoalkohol (C)) eingesetzt wurden.

### Herstellung eines Vergleich-Wasserbasislacks 2 (V2)

Der Wasserbasislack V2 wurde analog Tabelle A hergestellt, wobei allerdings statt den in der wässrigen Phase vorhandenen 5 Gewichtsteilen Butylglykol (BASF SE) 5 Gewichtsteile iso-Propanol (BASF SE) eingesetzt wurden.

### Herstellung eines Vergleich-Wasserbasislacks 3 (V3)

Der Wasserbasislack V3 wurde analog Tabelle A hergestellt, wobei allerdings statt den in der wässrigen Phase vorhandenen 5 Gewichtsteilen Butylglykol (BASF SE) 5 Gewichtsteile N-Ethylpyrrolidon (BASF SE) eingesetzt wurden.

### Herstellung eines Vergleich-Wasserbasislacks 4 (V4)

Der Wasserbasislack V4 wurde analog Tabelle A hergestellt, wobei allerdings statt den in der wässrigen Phase vorhandenen 5 Gewichtsteilen Butylglykol (BASF SE) 5 Gewichtsteile n-Butanol (BASF SE) eingesetzt wurden.

Tabelle B fasst nochmals alle hergestellten Basislacke zusammen.

**Tabelle B:**

| | Lösemittel |
|---|---|
| Wasserbasislack V1 | Butylglykol |
| Wasserbasislack V2 | iso-Propanol |
| Wasserbasislack V3 | N-Ethylpyrrolidon |
| Wasserbasislack V4 | n-Butanol |
| Wasserbasislack E1 | 3-Butoxy-2-propanol |
| Wasserbasislack E2 | 2-Ethylhexanol |
| Wasserbasislack E3 | 1-Propoxy-2-propanol |
| Wasserbasislack E4 | Dipropylenglykolmonomethylether |
| Wasserbasislack E5 | 2-Ethylhexylglykol |

### Vergleichende Untersuchung der Basislacke hinsichtlich ihrer Ringleitungsstabilität

Zur Bestimmung der Farbtonstabilität der entsprechenden Lacke gegenüber Ringleitungsbelastung wurden jeweils 20 Liter des jeweiligen Lacks folgendermaßen behandelt:
Der Lack wurde in eine Ringleitungsanlage eingefüllt. Anschließend wurden die Lacke bei einem Arbeitsdruck der Anlage von 10 bar und einer Temperatur von 21 ± 2°C über einen Zeitraum von 77,1 min umgepumpt. Nach dieser Zeit, die einer Belastung von 50 Turn Over (1 Turn Over (TO) = 1 Materialumlauf in der Ringleitung) entspricht, wurden 1,5 Liter des Lacks zu Lackierungszwecken entnommen. Dieses Vorgehen wurde bis zu einer Lackbelastung von 2000 TO wiederholt, wobei die Zeiten in der Ringleitungsanlage aufgrund des sich mit jeder Probenahme reduzierenden Materialvolumens analog Tabelle C angepasst wurden.

**Tabelle C: Probenahme und entsprechende Turn Over versus Aufenthaltszeiten in der Ringleitungsanlage**

| Proben-Nr. | TO | Restvolumen vor Probenahme [I] | Zeitdifferenz (Probe X - Probe (X+1)) [min] | Probenvolumen [I] |
|---|---|---|---|---|
| 0 | 0 | 20 | 0 | 1,5 |
| 1 | 50 | 18,5 | 77,1 | 1,5 |
| 2 | 250 | 17,0 | 283,3 | 1,5 |
| 3 | 500 | 15,5 | 322,9 | 1,5 |
| 4 | 1000 | 14,0 | 583,3 | 1,5 |
| 5 | 1250 | 12,5 | 302,1 | 1,5 |
| 6 | 1500 | 11,0 | 229,2 | 1,5 |
| 7 | 1750 | 9,5 | 197,9 | 1,5 |
| 8 | 2000 | 8,0 | 166,7 | 1,5 |

Die erhaltenen Lackproben wurden anschließend nach einem Standardverfahren lackiert und die resultierenden Farbtöne gemessen.

### Lackierung:

Als Substrat diente ein Blech der Abmessungen 10 cm x 20 cm, welches eine gehärtete Füllerlackierung eines handelsüblichen Füllers mit einer Schichtdicke von 30 ± 3 µm aufwies. Auf dieses Substrat wurde zunächst jeweils der Wasserbasislack (die Lackprobe) pneumatisch mit einer Trockenfilmschichtdicke von 13 bis 18 µm appliziert. Nach 1 Minute Ablüften bei Raumtemperatur wurde der Wasserbasislack über 10 Minuten bei 70°C im Umluftofen zwischengetrocknet. Anschließend wurde der von der BASF Coatings GmbH kommerziell erhältliche Zweikomponenten-Klarlack ProGloss^{®} (FF99-0345) mit einer Trockenfilmschichtdicke von 40 ± 5 µm ebenfalls pneumatisch appliziert und nach 20 Minuten Ablüften bei Raumtemperatur Basislack und Klarlack gemeinsam bei 140°C für 20 Minuten im Umluftofen eingebrannt.

### Farbtonmessung :

Die Farbtonmessung wurde unter Verwendung des Spectrophotometers MA68II der Firma X-Rite durchgeführt.

In Tabelle 1 sind die Helligkeitswerte der Farbtonmessungen der verschiedenen Proben gegenüber den Belastungen in der Ringleitung dargestellt. Dabei ist jeweils der Differenzwert zu der Messung des Lackierungsaufbaus mit dem unbelasteten Basislack angegeben.

**Tabelle 1:**

| | **Probe.** | **TO** | **L (25°)** | **L (45°)** | **L (75°)** |
|---|---|---|---|---|---|
| **Wasserbasislack 1** | 0 | 0 | 0 | 0 | 0 |
| | 1 | 50 | -0,13 | -0,03 | 0,01 |
| | 2 | 250 | -0,24 | 0,75 | 0,61 |
| | 3 | 500 | -1,00 | 0,89 | 0,95 |
| | 4 | 1000 | -0,98 | 1,74 | 1,65 |
| | 5 | 1250 | -1,36 | 2,20 | 2,06 |
| | 6 | 1500 | -1,53 | 2,10 | 2,13 |
| | 7 | 1750 | -1,68 | 2,61 | 2,55 |
| | 8 | 2000 | -2,07 | 2,76 | 2,74 |
| **Wasserbasislack 2** | 0 | 0 | 0 | 0 | 0 |
| | 1 | 50 | -0,07 | 0,29 | 0,35 |
| | 2 | 250 | -0,05 | 1,09 | 0,88 |
| | 3 | 500 | -0,57 | 1,47 | 1,46 |
| | 4 | 1000 | -1,12 | 2,14 | 2,10 |
| | 5 | 1250 | -1,16 | 2,98 | 2,85 |
| | 6 | 1500 | -1,63 | 3,22 | 3,08 |
| | 7 | 1750 | -1,75 | 3,00 | 3,03 |
| | 8 | 2000 | -2,13 | 2,97 | 3,12 |
| **Wasserbasislack 3** | 0 | 0 | 0 | 0 | 0 |
| | 1 | 50 | -0,35 | 0,60 | 0,52 |
| | 2 | 250 | -0,59 | 1,15 | 1,05 |
| | 3 | 500 | -0,77 | 1,86 | 1,60 |
| | 4 | 1000 | -1,20 | 2,85 | 2,45 |
| | 5 | 1250 | -1,09 | 2,89 | 2,61 |
| | 6 | 1500 | -1,42 | 2,80 | 2,71 |
| | 7 | 1750 | -1,38 | 3,31 | 3,04 |
| **Wasserbasislack 4** | 8 | 2000 | -1,92 | 3,50 | 3,39 |
| | 0 | 0 | 0 | 0 | 0 |
| | 1 | 50 | -0,11 | 0,34 | 0,39 |
| | 2 | 250 | -0,17 | 1,02 | 0,96 |
| | 3 | 500 | -0,63 | 1,48 | 1,52 |
| | 4 | 1000 | -1,19 | 2,08 | 2,21 |
| | 5 | 1250 | -1,27 | 2,89 | 2,93 |
| | 6 | 1500 | -1,59 | 3,08 | 3,01 |
| | 7 | 1750 | -1,79 | 3,14 | 3,21 |
| | 8 | 2000 | -2,25 | 3,28 | 3,31 |
| **Wasserbasislack E1** | 0 | 0 | 0 | 0 | 0 |
| | 1 | 50 | -0,16 | 0,04 | 0,12 |
| | 2 | 250 | -0,01 | 0,25 | 0,34 |
| | 3 | 500 | -0,30 | 0,26 | 0,40 |
| | 4 | 1000 | -0,16 | 0,90 | 0,81 |
| | 5 | 1250 | -0,16 | 1,00 | 0,98 |
| | 6 | 1500 | -0,46 | 1,30 | 1,15 |
| | 7 | 1750 | -0,57 | 1,48 | 1,27 |
| | 8 | 2000 | -0,59 | 1,37 | 1,32 |
| **Wasserbasislack E2** | 0 | 0 | 0 | 0 | 0 |
| | 1 | 50 | 1,31 | -0,63 | -0,74 |
| | 2 | 250 | 1,34 | -0,81 | -0,55 |
| | 3 | 500 | 1,41 | -0,81 | -0,52 |
| | 4 | 1000 | 1,10 | -0,84 | -0,46 |
| | 5 | 1250 | 1,13 | -0,60 | -0,14 |
| | 6 | 1500 | 0,65 | -0,94 | -0,16 |
| | 7 | 1750 | 1,35 | -0,79 | -0,51 |
| | 8 | 2000 | 1,39 | -0,81 | -0,58 |
| **Wasserbasislack E3** | 0 | 0 | 0 | 0 | 0 |
| | 1 | 50 | -0,27 | 0,08 | 0,17 |
| | 2 | 250 | -0,18 | 0,32 | 0,24 |
| | 3 | 500 | -0,24 | 0,39 | 0,45 |
| | 4 | 1000 | -0,21 | 0,95 | 0,91 |
| **Wasserbasislack E4** | 5 | 1250 | -0,29 | 1,10 | 1,23 |
| | 6 | 1500 | -0,62 | 1,46 | 1,39 |
| | 7 | 1750 | -0,71 | 1,58 | 1,61 |
| | 8 | 2000 | -0,75 | 1,42 | 1,38 |
| | 0 | 0 | 0 | 0 | 0 |
| | 1 | 50 | 1,21 | -0,91 | -0,87 |
| | 2 | 250 | 1,14 | -0,87 | -1,04 |
| | 3 | 500 | 1,29 | -1,06 | -0,75 |
| | 4 | 1000 | 1,38 | -1,15 | -0,93 |
| | 5 | 1250 | 1,45 | -1,25 | -1,01 |
| | 6 | 1500 | 1,35 | -1,09 | -0,83 |
| | 7 | 1750 | 1,30 | -1,03 | -0,79 |
| | 8 | 2000 | 1,41 | -1,39 | -1,21 |
| **Wasserbasislack E5** | 0 | 0 | 0 | 0 | 0 |
| | 1 | 50 | 0,89 | -0,67 | -0,95 |
| | 2 | 250 | 0,91 | -0,78 | -1,14 |
| | 3 | 500 | 1,21 | -0,95 | -1,28 |
| | 4 | 1000 | 1,39 | -0,71 | -1,01 |
| | 5 | 1250 | 1,25 | -1,24 | -1,05 |
| | 6 | 1500 | 1,17 | -1,09 | -1,36 |
| | 7 | 1750 | 1,38 | -1,28 | -1,11 |
| | 8 | 2000 | 1,31 | -1,32 | -1,13 |

Die Ergebnisse untermauern, dass die erfindungsgemäß zu verwendenden Basislacke eine deutlich höhere Ringleitungsbeständigkeit aufweisen. So bleibt der Farbton (hier repräsentiert über die Helligkeitswerte) der resultierenden Lackierungen im Vergleich zu Lackierungen, die unter Einsatz der Vergleichs-Wasserbasislacke V1 bis V4 hergestellt wurden, bei steigender Ringleitungsbelastung deutlich stabiler.

## Patentansprüche

1. Verwendung einer Kombination von
(A) mindestens einem hydroxylfunktionellen Polymer als eine Bindemittelkomponente
(B) mindestens einer von der Komponente (A) verschiedenen Bindemittelkomponente enthaltend
(B1) mindestens ein Carbonylgruppen-haltiges Polyurethan-Poly(meth)acrylat sowie
(B2) mindestens eine organische Verbindung mit mindestens zwei Hydrazin-, Hydrazid- und/oder Hydrazongruppen,
sowie
(C) mindestens einem verzweigten und/oder sekundären aliphatischen Monoalkohol mit mindestens vier Kohlenstoffatomen,
in wässrigen Basislacken zur Verbesserung der Ringleitungsstabilität dieser Basislacke.

## Claims

1. Use of a combination of
(A) at least one hydroxyl-functional polymer as a binder component,
(B) at least one binder component which is different from component (A) and comprises
(B1) at least one carbonyl group-containing polyurethane poly(meth)acrylate
and also
(B2) at least one organic compound having at least two hydrazine, hydrazide and/or hydrazone groups,
and also
(C) at least one branched and/or secondary aliphatic monoalcohol having at least four carbon atoms
in aqueous basecoat materials for improving the circulation line stability of these basecoat materials.

## Revendications

1. Utilisation d'une combinaison de
(A) au moins un polymère fonctionnalisé par hydroxyle en tant que composant de liant
(B) au moins un composant de liant différent du composant (A) contenant
(B1) au moins un polyuréthane-poly(méth)acrylate contenant des groupes carbonyle
ainsi que
(B2) au moins un composé organique comportant au moins deux groupes hydrazine, hydrazide et/ou hydrazone,
ainsi que
(C) au moins un monoalcool aliphatique ramifié et/ou secondaire comportant au moins quatre atomes de carbone,
dans des vernis aqueux de base pour l'amélioration de la stabilité de conduite annulaire de ces vernis de base.
